# FASCICULE DE BREVET EUROPEEN

(11) **EP 3 994 017 B1**
(45) Date de publication et mention de la délivrance du brevet: **10.09.2025**
(21) Numéro de dépôt: 20746256.5
(22) Date de dépôt: 30.06.2020
(51) Int. Cl.: B60H 1/22, H05B 3/34

(54) **STRUCTURE CHAUFFANTE POUR VEHICULE AUTOMOBILE**
HEIZSTRUKTUR FÜR EIN KRAFTFAHRZEUG
HEATING STRUCTURE FOR A MOTOR VEHICLE

(30) Priorité: 02.07.2019 FR 1907341
(43) Date de publication de la demande: 11.05.2022
(73) Titulaire: VALEO SYSTEMES THERMIQUES, 78320 Le Mesnil Saint-Denis (FR)
(72) Inventeur: DEVIENNE, Nicolas, 78320 Le Mesnil Saint-Denis (FR); MARTIN, Franck, 78320 Le Mesnil Saint-Denis (FR); TANGHE, Alcina, 78320 Le Mesnil Saint-Denis (FR)
(74) Mandataire: Valeo Powertrain Systems
(86) Numéro de dépôt international: PCT/FR2020/051143
(87) Numéro de publication internationale: WO 2021/001625

(56) Documents cités:
- EP-A1- 2 736 304
- EP-B1- 2 123 120
- WO-A2-00/43225
- FR-A1- 3 064 874
- JP-A- H02 135 683

## Description

La présente invention concerne une structure chauffante destinée notamment à être installé à l'intérieur d'un habitacle d'un véhicule, cette structure étant notamment un panneau radiant.

Généralement, un panneau radiant comprend une pluralité d'électrodes configurées pour délivrer de la chaleur par effet Joule en alimentant avec du courant électrique un revêtement conducteur. On pourra par exemple se reporter au document US 2016/0059669 qui décrit un tel panneau radiant.

EP 2 123 120 B1 (PANASONIC CORP [JP]) 30 septembre 2015 (2015-09-30) divulgue une structure chauffante destinée notamment à être installée à l'intérieur d'un habitacle d'un véhicule, cette structure étant notamment un panneau radiant, la structure chauffante comprenant au moins une couche résistive agencée pour produire un dégagement thermique lorsque cette couche est traversée par un courant électrique.

WO 00/43225 A2 (CHIOVATERO ANTOINETTE EF [US]; ILLINOIS TOOL WORKS [US] ET AL.) 27 juillet 2000 (2000-07-27) concerne une structure chauffante flexible autorégulatrice adaptée à une utilisation dans les composants automobiles, mais qui peut être utilisée dans d'autres applications, y compris, mais sans s'y limiter, les meubles, les articles de consommation, les matériaux de construction et d'autres articles.

Un panneau radiant est un dispositif comprenant généralement un circuit électrique configuré pour délivrer de la chaleur par effet Joule en alimentant avec du courant électrique des éléments conducteurs résistifs. Il peut s'agir d'éléments filaires ou des revêtements surfaciques. D'après la littérature existante, le revêtement conducteur peut être par exemple une couche de peinture comprenant des particules de carbone et/ou des particules métalliques. Un problème soulevé aujourd'hui est la difficulté d'obtenir un chauffage homogène sur toute la surface du panneau radiant, c'est-à-dire une température de chauffage qui ne varie pas d'un point à l'autre de la surface du panneau radiant. A cet inconvénient s'ajoutent des contraintes géométriques puisque le panneau radiant est destiné à être disposé dans différentes parties de l'habitacle (pavillon, portière, pilier, boîte à gants, etc..

La présente invention a pour objet de proposer des panneaux radiants améliorés.

La présente invention ainsi une structure chauffante destinée notamment à être installée à l'intérieur d'un habitacle d'un véhicule, cette structure chauffante étant notamment un panneau radiant, la structure chauffante comprenant au moins une couche résistive agencée pour produire un dégagement thermique lorsque cette couche est traversée par un courant électrique, cette structure comprenant en outre un réseau d'électrodes comportant une pluralité d'électrodes de contact agencées pour être en contact électrique avec la couche résistive pour faire parcourir du courant électrique dans cette couche résistive, certaines au moins de ces électrodes de contact étant agencées avec une inter-distance entre électrodes successives qui est variable.

Il est connu que la puissance thermique créée par effet Joule dépend de la tension d'alimentation U ainsi que de la résistance électrique R entre les deux électrodes, ici deux électrodes de contact, et vérifie la loi : P = U²/R. La résistance R est proportionnelle à la distance d entre les deux électrodes de contact.

Le déposant a constaté que la consommation électrique de chaque zone de la couche résistive, entre deux électrodes de contact consécutives, entraîne une chute de tension le long de l'électrode de distribution, et donc le long des paires d'électrodes de contact. Comme la différence de potentiel pour ces zones est reliée à la puissance fournie par la zone avec la formule de la puissance P = U²/ R, la structure chauffante fournit de moins en moins de capacité de chauffage le long des paires d'électrodes de contact. L'invention permet de contrecarrer ce phénomène d'hétérogénéité de chauffage et de fournir un chauffage homogène, grâce à ces inter-distances entre électrodes de contact qui sont adaptées pour diminuer la résistance électrique entre deux électrodes de contact et ainsi avoir une puissance dissipée aussi homogène que souhaitée.

L'invention permet, pour obtenir cette homogénéité, d'utiliser le même revêtement résistif ou couche résistive, notamment de même conductivité, avec la même épaisseur. Cela permet de garder le processus simple de fabrication de la structure chauffante.

Selon l'un des aspects de l'invention, les électrodes de contact sont, au moins pour certaines d'entre elles, notamment pour toutes les électrodes de contact du réseau d'électrodes, parallèles entre elles.

Selon l'un des aspects de l'invention, le réseau d'électrodes comprend des électrodes de distribution agencées pour conduire du courant électrique d'une source électrique vers les électrodes de contact, plusieurs électrodes de contact se raccordant à une même électrode de distribution.

Selon l'un des aspects de l'invention, l'une au moins des électrodes de distribution est rectiligne sur une partie au moins de sa longueur, et les électrodes de contact qui sont associées à cette électrode de distribution se raccordant, par exemple perpendiculairement, à cette électrode de distribution.

Bien entendu, les électrodes de distribution peuvent présenter des formes différentes, notamment courbes avec des arrondis. Les électrodes de distribution peuvent parallèles entre elles ou non.

Selon l'un des aspects de l'invention, le réseau d'électrodes comporte au moins deux électrodes de distribution qui sont parallèles entre elles sur au moins une partie de leur longueur, et leurs électrodes de contact associées sont disposées entre ces deux électrodes de distribution et sont alternées avec une inter-distance qui décroit en lien avec la décroissance de la tension présente entre les paires d'électrodes de manière à maintenir sensiblement uniforme la puissance électrique entre les paires d'électrodes de contact.

Selon l'un des aspects de l'invention, les électrodes de contact disposées entre deux électrodes de distribution, ces électrodes de contact faisant partie d'un même groupe d'électrodes de contact, présente seulement deux valeurs d'inter-distance, ou au moins trois valeurs ou plus valeurs d'inter-distance.

Selon l'un des aspects de l'invention, la couche résistive est une couche déposée sur un substrat, notamment par sérigraphie, cette couche résistive s'étendant notamment entre les deux électrodes de distribution associées au groupe d'électrodes de contact.

Selon l'un des aspects de l'invention, la couche résistive comporte notamment du carbone.

Selon l'un des aspects de l'invention, les électrodes sont réalisées en matériau conducteur, notamment métallique tel que de l'encre chargée de particules conductrices, notamment de particules d'argent ou de cuivre. Si on le souhaite, les électrodes sont des rubans adhésifs métalliques, par exemple en cuivre. Le cas échéant, ces électrodes pourront éventuellement être réalisées par dépôt d'un matériau sur le substrat

Selon l'un des aspects de l'invention, la couche résistive associée au groupe d'électrodes de contact est une couche continue, ou en variante comporte une pluralité d'éléments résistifs discrets formant cette couche.

Selon l'un des aspects de l'invention, les électrodes de contact d'un même groupe présentent la même longueur.

Selon l'un des aspects de l'invention, la structure chauffante comporte un substrat qui porte la couche résistive et les électrodes. Le substrat est de préférence d'épaisseur inférieure à 1 cm, pour une superficie de plusieurs cm2 au moins.

L'invention a encore pour objet un composant d'habitable de véhicule automobile, notamment un composant pour être intégré à une portière du véhicule, ou notamment des parties de planche de bord, d'habillage de cave à pied, de pavillon, d'accoudoir, comportant une structure chauffante, notamment un panneau radiant, telle que précitée.

Selon l'un des aspects de l'invention, le composant d'habitacle qui comprend la structure chauffante, par exemple le panneau radiant, est agencé pour chauffer par radiation thermique (panneau radiant) ou par conduction thermique ou contact thermique (structure chauffante par contact), et non par chauffage par convection, par exemple par de la chaleur transportée par de l'air en mouvement. Notamment la structure chauffante n'est traversée par aucun flux d'air destiné à refroidir ou chauffer l'habitacle. De préférence, le panneau est déconnecté de système de mise en mouvement d'air.

La structure chauffante et l'HAVC du véhicule peuvent, si on le souhaite, être contrôlés de manière coordonnée.

Le composant forme par exemple un élément d'une boite à gant ou un panneau de portière de véhicule, ou de toit d'habitacle.

L'invention a encore pour objet une structure chauffante ayant une couche résistive et des électrodes pour chauffer cette couche, cette structure étant configurée pour être intégrée dans un composant d'habitacle qui comporte un décor visible depuis l'intérieur de l'habitacle, ce décor étant par exemple un habillage de l'habitable, tel que par exemple un tissu, un cuir ou un revêtement esthétique.

L'invention a encore pour objet, indépendamment ou en combinaison avec ce qui précède, une structure chauffante destinée notamment à être installée à l'intérieur d'un habitacle d'un véhicule, cette structure étant notamment un panneau radiant, la structure chauffante comprenant au moins une couche résistive agencée pour produire un dégagement thermique lorsque cette couche est traversée par un courant électrique, cette structure comprenant en outre un réseau d'électrodes comportant une pluralité d'électrodes de contact agencées pour être en contact électrique avec la couche résistive pour faire parcourir du courant électrique dans cette couche résistive, les électrodes de contact et la couche résistive sont portées sur un substrat réalisé dans un matériau souple capable de prendre une forme prédéterminée par déformation, ce substrat étant notamment également extensible. Notamment les éléments de la structure chauffante forment un ensemble extensible, à savoir le substrat, la couche résistive et les électrodes de contact sont extensibles et flexibles.

Selon l'un des aspects de l'invention, les électrodes de contact sont formées par des fils enchevêtrés, notamment tissés ou tricotés, sur ou dans un substrat respectivement tissé ou tricoté. Les fils conducteurs formant les électrodes de contact sont au contact de la couche résistive.

Selon l'un des aspects de l'invention, le substrat est un non tissé. Ce non-tissé peut comporter un mélange de fibres en polypropylène et/ou de fibres en polyester. D'autres fibres peuvent être utilisées, par exemple des fibres naturelles.

En variante, le substrat est un tissu, notamment avec des files extensibles, ou une structure tricotée.

Selon l'un des aspects de l'invention, le substrat peut être une feuille de plastique souple ou une mousse telle que TPU (thermoplastique polyuréthane.

Avantageusement pour rester sensiblement invisible et/ou imperceptible, les électrodes de contact et/ou la couche résistive doivent être suffisamment mince, notamment avec une épaisseur inférieure à 100 microns, et être flexibles. Ces électrodes et la couche résistive peuvent comporter une encre conductrice extensible et/ ou être à l'intérieur du substrat.

Selon l'un des aspects de l'invention, la couche résistive peut comporter une feuille résistive extensible, une couche de peinture résistive ou une encre résistive. La feuille résistive est une feuille capable de dégager de la chaleur lorsqu'elle est parcourue par un courant électrique.

Selon l'un des aspects de l'invention, l'encre conductrice peut être ajoutée sur le substrat par sérigraphie, offset, impression par jet d'encre, estampage à chaud et transfert, électrodéposition.

Selon l'un des aspects de l'invention, le substrat peut être un élément de décoration de l'habitacle, notamment un élément visible pour des passagers dans l'habitacle. Ce type de substrat décoratif peut être choisi parmi : un substrat en cuir ou simili-cuir, contenant notamment du PVC, un textile qui peut être du type 3D ou non, un film plastique décoratif.

L'invention concerne également une structure chauffante destinée notamment à être installée à l'intérieur d'un habitacle d'un véhicule, cette structure étant notamment un panneau radiant, la structure chauffante comprenant un ensemble de fils enchevêtrés dont certains fils forment des fils conducteurs chauffants agencés pour produire de la chaleur lorsque ces fils chauffants sont parcourus par un courant électriques.

Dans un exemple de réalisation de l'invention, le substrat peut être un textile extensible qui incorpore des fils comme matériau chauffant. En variante, le substrat peut être un textile extensible ou un tricot extensible qui incorpore des fils utilisés comme électrodes de contact et la couche résistive est placée à la surface. L'encre résistive est assemblée par exemple sur le textile par laminage, sérigraphie ou estampage à chaud et transfert.

Le substrat peut être une structure tricotée avec l'un au moins des fils suivants : des fils non étirables pour le substrat, des fils conducteurs non étirables pour des électrodes, des fils de cuivre simple brin ou multibrins, un fil conducteur en cuivre et des fils non conducteurs pour des raisons de résistance mécanique ou de facilité de fabrication.

La structure tricotée présente l'avantage que, même si le fil de support et le fil conducteur qui forme par exemple une électrode ne sont pas étirables, la structure du point de tricot rend la structure tricotée étirable. Avec un fil de cuivre non étirable, la possibilité d'allongement du tricot est d'environ 14% par exemple.

Selon l'un des aspects de l'invention, la structure chauffante comporte un circuit de distribution électrique comportant des électrodes de distribution qui transportent le courant des connecteurs vers les électrodes de contact qui sont au contact par exemple d'une couche résistive.

Les électrodes de contact et de distribution sont par exemple en fils de cuivre.

Lorsque le substrat est tissé, la caractéristique extensible peut être obtenu soit par l'agencement de la structure tissée, à savoir par la technique de tissage, soit par le caractère intrinsèque étirable des fils utilisés pour le tissage.

Notamment, si l'allongement potentiel du fil conducteur est différent de celui des fibres principales du tissu, l'extrémité de chaque conducteur doit rester libre de se déplacer à l'intérieur ou à l'extérieur du tissu.

Si plusieurs électrodes de contact sont reliées ensemble à l'une des électrodes de distribution, la connexion entre l'électrode de distribution et les électrodes de contact peut être réalisée en intégrant l'électrode de distribution dans la trame de tissage et les électrodes de contact dans la chaine de tissage ou inversement. Grâce à un passage alternatif sur les deux côtés de la structure tissée, la connexion entre électrodes est sécurisée.

Afin d'avoir un procédé de fabrication continu de la structure tricotée ou tissée, il est possible de connecter les deux côtés des électrodes de contact aux électrodes de distribution puis de neutraliser électriquement une portion de ces électrodes de contact de l'électrode de distribution par une coupe des fils des électrodes de contact en les estampant dans un zone estampée, ou en intégrant un isolant électrique à l'emplacement où la connexion électrique doit être interrompue dans une zone interrompue.

En variante, il est possible d'avoir un connecteur à la fin de chaque électrode de contact, ou une électrode de distribution externe reliant toutes les électrodes de contact ensemble.

L'invention concerne encore un procédé de fabrication d'une structure chauffante, comportant les étapes de tisser ou tricoter un substrat et de prévoir sur le substrat des zones chauffantes ou radiantes formées par des fils tissés ou tricotés avec le substrat, ou en déposant une couche résistive sur le substrat.

L'invention permet par exemple de fournir une structure chauffante formant une pièce décorée d'un intérieur d'un véhicule automobile, pièce de forme complexe. Ces surfaces complexes peuvent présenter des courbures selon les axes dans les trois dimensions.

Selon une manière désavantageuse de faire, n'utilisant pas l'invention, la surface peut être décorée avec une couche de film plastique, de cuir ou de textile qui rend visible toute aspérité ou faiblesse de l'épaisseur de la surface. Cela entraîne une sensation de dommage dans la conception de la pièce.

Un problème avec cette manière de faire, c'est qu'une interposition d'un matériau de lissage entre la structure chauffante et la surface de décoration entraîne une isolation thermique qui réduit la température de la surface de décoration et réduit ainsi la puissance de chauffage fournie à l'environnement de la cabine.

La puissance électrique requise pour avoir une puissance de chauffage suffisante (par exemple supérieure à 500 W / m²) donnant une sensation positive de confort sous une tension basse (par exemple inférieure à 50 Volts) nécessite une section suffisante de lignes conductrices difficiles à dissimuler derrière une couche décorative.

L'invention permet d'avoir une structure chauffante à la fois avec de très faibles défauts d'épaisseur, et extensible pour s'adapter à la forme complexe tout en restant sensiblement imperceptible.

Il est entendu que l'ensemble des caractéristiques et configurations précédemment ne sont en rien limitatives. D'autres caractéristiques, détails et avantages de l'invention ressortiront plus clairement à la lecture de la description détaillée donnée ci-après, et de plusieurs exemples de réalisation donnés à titre indicatif et non limitatif en référence aux dessins schématiques annexés, sur lesquels :
La figure 1 [Fig. 1] est une représentation schématique d'un exemple de réalisation d'un panneau radiant selon un exemple de réalisation de l'invention;
La figure 2 [Fig. 2] est une représentation schématique de composants incluant le panneau radiant de l'invention,
La figure 3 [Fig. 3] est une représentation schématique d'une autre structure chauffante de l'invention,
La figure 4 [Fig. 4] est une représentation schématique d'une autre structure chauffante de l'invention,
La figure 5 [Fig. 5] est une représentation schématique d'une autre structure chauffante de l'invention.

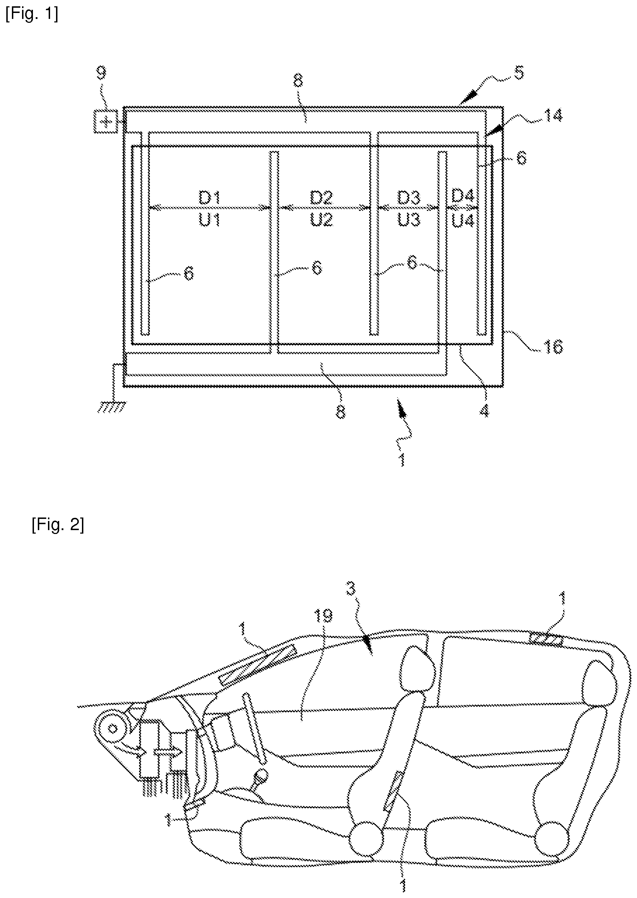

La figure 1 représente panneau radiant 1, formant une structure chauffante au sens de l'invention, agencé pour être installé à l'intérieur d'un habitacle 3 d'un véhicule.

Le panneau radiant 1 comprend une couche résistive 4 agencée pour produire un dégagement thermique lorsque cette couche 4 est traversée par un courant électrique.

La couche résistive 4 est par exemple une peinture acrylique chargée de particules conductrices ou semi conductrices. La charge conductrice est par exemple sous la forme de paillettes de carbone et de graphite.

Ce panneau 1 comprend en outre un réseau d'électrodes 5 comportant une pluralité d'électrodes de contact 6 agencées pour être en contact électrique avec la couche résistive 4 pour faire parcourir du courant électrique dans cette couche résistive 4.

Ces électrodes de contact 6 sont agencées avec une inter-distance D1, D2 ... Di entre électrodes successives, inter-distance qui est variable.

Ces électrodes de contact 6 sont rectilignes et parallèles entre elles dans l'exemple décrit.

Le réseau d'électrodes 5 comprend des électrodes de distribution 8 agencées pour conduire du courant électrique, l'une de ces électrodes 8 étant reliée d'une source électrique 9 par exemple de polarité électrique positive, vers les électrodes de contact 6. L'autre électrode de distribution 8 est reliée à l'autre polarité, étant par exemple reliée à une masse.

Le courant électrique passe ainsi dans une électrode de distribution 8, qui le distribue dans les électrodes de contact 6. Le courant circule ensuite dans la couche résistive 4 avant d'être collecté par les électrodes de contact 6 reliées à l'autre électrode de distribution 8.

Plusieurs électrodes de contact 6 se raccorde à une même électrode de distribution 8.

Les électrodes de distribution 8 sont rectilignes sur une partie de sa longueur, voire toute leur longueur, et les électrodes de contact 6 qui sont associées à ces électrodes de distribution 8 se raccordant perpendiculairement à cette électrode de distribution 8 associée.

Ici le réseau d'électrodes 5 comporte deux électrodes de distribution 8 qui sont parallèles entre elles, et leurs électrodes de contact 6 associées sont disposées entre ces deux électrodes de distribution 8 et sont alternées avec une inter-distance D1, D2.. Di qui décroit en lien avec la décroissance de la tension U1, U2... Ui présente entre les paires d'électrodes 6 de manière à maintenir sensiblement uniforme la puissance électrique entre les paires d'électrodes de contact.

Les électrodes de contact 6 disposées entre les deux électrodes de distribution 8, ces électrodes de contact faisant partie d'un même groupe 14 d'électrodes de contact, présente une pluralité de valeurs d'inter-distance D1, D2 ... Di. Dans l'exemple décrit, nous avons D1>D2>D3> D4, et U1>U2>U3> U4 pour les tensions entre les électrodes 6.

La couche résistive 4 est une couche déposée sur un substrat 16, notamment par sérigraphie, cette couche résistive 4 s'étendant notamment entre les deux électrodes de distribution 8 associées au groupe d'électrodes de contact.

Les électrodes 6 et 8 sont réalisées en matériau conducteur, notamment métallique tel que de l'encre chargée de particules conductrices, notamment de particules d'argent ou de cuivre.

Dans l'exemple décrit, la couche résistive 4 associée au groupe d'électrodes de contact est une couche continue sensiblement rectangulaire. D'autres formes sont bien entendu envisageables.

Les électrodes de contact 6 d'un même groupe 14 présentent la même longueur. En variante, les électrodes 6 peuvent être de longueur différentes.

Dans un exemple non illustré, plusieurs paires d'électrodes de distribution 8 peuvent être prévues, et il y a alors plusieurs groupe 14 d'électrodes de contact 6.

Un composant d'habitable 19 de véhicule automobile, notamment un composant pour être intégré à une portière du véhicule, est prévu avec un panneau radiant 1. Plusieurs composants peuvent être revus dans l'habitacle.

Le composant 19 peut comportant une couche de décoration appliquée sur le panneau radiant. La couche de décoration peut par exemple être imperméable à de l'air, étant par exemple du cuir.

Les électrodes de distribution 8 peuvent, si on le souhaite, avoir des formes plus complexes, avec par exemple un ou plusieurs coudes arrondis reliant des portions rectilignes.

Dans l'exemple décrit, toutes les valeurs Ui d'inter-distance d'un groupe 15 sont différentes. En variante, il est possible que certaines valeurs inter-distance d'un même groupe sont identiques, et non toutes différentes.

Le substrat peut être une feuille ou une toile par exemple.

Les électrodes de contact 6 et leurs électrodes de distribution 8 associées sont agencées à la manière de peignes imbriqués.

Dans une variante, la structure chauffante est utilisée dans un composant d'habitacle, étant un accoudoir pour passager, cette structure pouvant réchauffer le bras d'un passager par contact thermique.

Dans l'exemple décrit, le substrat 16 est extensible. Notamment les éléments de la structure chauffante forment un ensemble extensible, à savoir le substrat 16, la couche résistive 4 et les électrodes de contact 6 sont extensibles et flexibles.

Les électrodes de contact 6 sont formées par des fils enchevêtrés, notamment tissés ou tricotés, sur un substrat 16 respectivement tissé ou tricoté.

Les fils conducteurs formant les électrodes de contact 6 sont au contact de la couche résistive 4.

Dans un autre exemple de l'invention, le substrat est un non tissé. Ce non-tissé peut comporter un mélange de fibres en polypropylène et/ou de fibres en polyester. D'autres fibres peuvent être utilisées, par exemple des fibres naturelles.

En variante, le substrat 16 est un tissu, notamment avec des files extensibles, ou une structure tricotée.

Selon l'un des aspects de l'invention, le substrat peut être une feuille de plastique souple ou une mousse telle que TPU (thermoplastique polyuréthane.

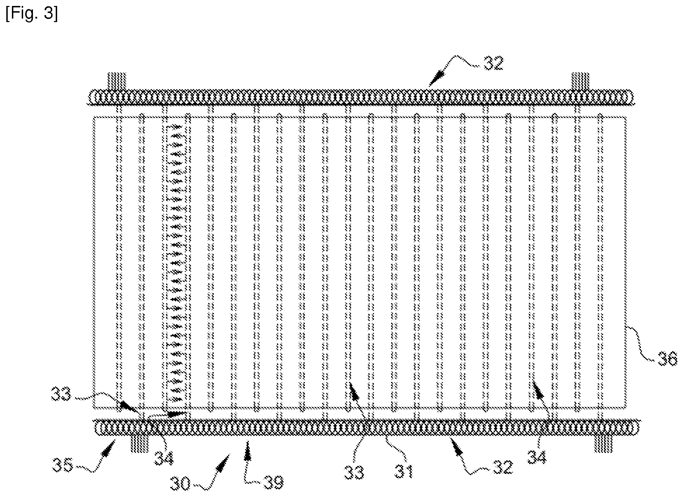

On a représenté sur la figure 3 une structure chauffante 30 destinée notamment à être installée à l'intérieur d'un habitacle d'un véhicule, cette structure étant un panneau radiant, la structure chauffante comprenant un ensemble de fils enchevêtrés dont certains fils 31 forment des électrodes de distribution 32, encore appelées Busbar an anglais, et d'autre fils enchevêtrés 33 froment des électrodes de contact 34.

Le substrat 35 sur lequel sont formées les électrodes 32 et 34 est ici une structure tricotée 35 qui incorpore des fils utilisés comme électrodes de contact et la couche résistive 36 est placée à la surface. L'encre résistive est assemblée par exemple sur le textile par laminage, sérigraphie ou estampage à chaud et transfert.

Le substrat 35 comporte l'un au moins des fils suivants : des fils non étirables pour le substrat, des fils conducteurs non étirables pour des électrodes, des fils de cuivre simple brin ou multibrins, un fil conducteur en cuivre et des fils non conducteurs pour des raisons de résistance mécanique ou de facilité de fabrication.

La structure chauffante 30 comporte un circuit de distribution électrique 39 comportant des électrodes de distribution 32 qui transportent le courant des connecteurs vers les électrodes de contact 34 qui sont au contact par exemple d'une couche résistive.

Les électrodes de contact 34 et de distribution 32 sont par exemple en fils de cuivre.

Lorsque le substrat 35 est tricoté, la caractéristique extensible peut être obtenu soit par l'agencement de la structure tricotée, à savoir par la technique de tricotage, soit par le caractère intrinsèque étirable des fils utilisés pour le tricotage.

Notamment, si l'allongement potentiel du fil conducteur est différent de celui des fibres principales du tricot, l'extrémité de chaque conducteur doit rester libre de se déplacer à l'intérieur ou à l'extérieur du tricot.

On considère A le nombre d'électrodes de contact 34 se raccordant à l'une des électrodes de distribution 32 et B est le nombre de fils utilisés pour chaque électrode de contact, les électrodes de distribution ont ainsi AxB fils tricotés. Les fils tricotés des électrodes de distribution sont tricotés pour également former des éléments de connexion.

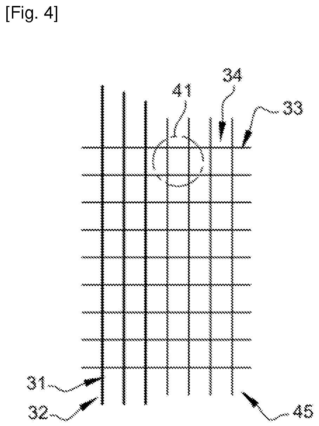

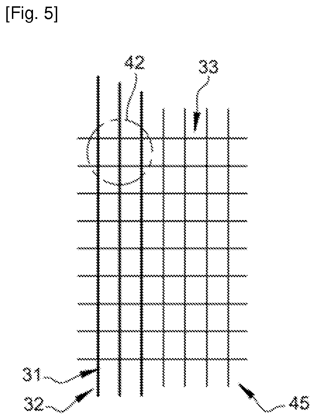

Afin d'avoir un procédé de fabrication continu de la structure tricotée ou tissée, il est possible de connecter les deux côtés des électrodes de contact 34 aux électrodes de distribution 32 puis de neutraliser électriquement une portion de ces électrodes de contact de l'électrode de distribution par une coupe des fils des électrodes de contact en les estampant, comme représenté par les zones 41 sur la figure 4, ou en intégrant un isolant électrique dans une zone 42 illustré sur la figure 5, à l'emplacement où la connexion électrique doit être interrompue. Les figures 4 et 5 illustrent des substrats tissés 45.

Il est possible d'avoir un connecteur à la fin de chaque électrode de contact 36, ou une électrode de distribution externe reliant toutes les électrodes de contact ensemble.

Les fils utilisés pour les électrodes de distribution sont de diamètre plus important que les fils utilisés pur former les électrodes de contact, ou fils de chauffage.

Dans le cas d'utilisation de fils de chauffage, il n'est pas obligatoire d'avoir une couche résistive, par exemple une couche d'encre résistive.

Si plusieurs électrodes de contact 34 sont reliées ensemble à l'une des électrodes de distribution 32, comme illustré sur la figure 3, la connexion entre l'électrode de distribution 32 et les électrodes de contact 34 peut être réalisée en intégrant l'électrode de distribution dans la trame de tissage et les électrodes de contact dans la chaine de tissage ou inversement. Grâce à un passage alternatif sur les deux côtés de la structure tissée, la connexion entre électrodes est sécurisée.

## Revendications

1. Structure chauffante (1) destinée notamment à être installée à l'intérieur d'un habitacle d'un véhicule, cette structure étant notamment un panneau radiant, la structure chauffante (30) comprenant au moins une couche résistive agencée pour produire un dégagement thermique lorsque cette couche (36) est traversée par un courant électrique, cette structure comprenant en outre un réseau d'électrodes comportant une pluralité d'électrodes de contact (34) agencées pour être en contact électrique avec la couche résistive pour faire parcourir du courant électrique dans cette couche résistive, les électrodes de contact (34) et la couche résistive sont portées sur un substrat (36) réalisé dans un matériau souple capable de prendre une forme prédéterminée par déformation, ce substrat étant notamment également extensible.

2. Structure chauffante selon la revendication précédente, dans laquelle les électrodes de contact (34) sont formées par des fils enchevêtrés, tissés ou tricotés, sur ou dans un substrat respectivement tissé ou tricoté.

3. Structure chauffante selon la revendication 1, dans laquelle le substrat est un non tissé.

4. Structure chauffante selon l'une des revendications précédentes, dans laquelle le substrat est un textile extensible ou tricot extensible qui incorpore des fils utilisés comme électrodes de contact et la couche résistive est placée à la surface.

5. Structure chauffante selon l'une des revendications précédentes et la revendication 2, dans laquelle plusieurs électrodes de contact étant reliées ensemble à une électrode de distribution, la connexion entre l'électrode de distribution et les électrodes de contact peut être réalisée en intégrant l'électrode de distribution dans la trame de tissage et les électrodes de contact dans la chaine de tissage ou inversement.

6. Structure chauffante selon l'une des revendications précédentes, dans laquelle les électrodes de contact (34) et des électrodes de distribution (32) sont par exemple en fils de cuivre.

7. Composant formant un élément d'une boite à gant ou un panneau de portière de véhicule, comportant une structure chauffante selon l'une des revendications précédentes.

## Patentansprüche

1. Heizstruktur (1), die insbesondere zur Installation im Inneren eines Fahrzeuginnenraums bestimmt ist, wobei diese Struktur insbesondere eine Strahlungsplatte ist, wobei die Heizstruktur (30) mindestens eine resistive Schicht umfasst, die angeordnet ist, um Wärme zu erzeugen, wenn diese Schicht (36) von einem elektrischen Strom durchflossen wird, wobei diese Struktur außerdem ein Elektrodennetzwerk umfasst, das eine Vielzahl von Kontaktelektroden (34) aufweist, die so angeordnet sind, dass sie mit der resistiven Schicht in elektrischem Kontakt stehen, um elektrischen Strom durch diese resistive Schicht zu leiten, wobei die Kontaktelektroden (34) und die resistive Schicht auf einem Substrat (36) getragen werden, das aus einem flexiblen Material hergestellt ist, das durch Verformung eine vorbestimmte Form annehmen kann, wobei dieses Substrat insbesondere auch dehnbar ist.

2. Heizstruktur nach dem vorhergehenden Anspruch, bei der die Kontaktelektroden (34) durch Verflechtungen, Gewebe oder Strickware auf oder in einem entsprechend gewebten oder gestrickten Substrat gebildet sind.

3. Heizstruktur nach Anspruch 1, bei der das Substrat ein Vliesstoff ist.

4. Heizstruktur nach einem der vorhergehenden Ansprüche, bei der das Substrat ein dehnbares Textil oder Strickware ist, das die als Kontaktelektroden verwendeten Fäden einschließt und bei der die resistive Schicht an der Oberfläche angebracht ist.

5. Heizstruktur nach einem der vorhergehenden Ansprüche und nach Anspruch 2, bei der mehrere Kontaktelektroden zusammen mit einer Verteilungselektrode verbunden sind, wobei die Verbindung zwischen der Verteilungselektrode und den Kontaktelektroden durch Integration der Verteilungselektrode in den Geweberahmen und die Kontaktelektroden in der Webkette oder umgekehrt hergestellt werden kann.

6. Heizstruktur nach einem der vorhergehenden Ansprüche, bei der die Kontaktelektroden (34) und die Verteilungselektroden (32) beispielsweise aus Kupferdrähten bestehen.

7. Bauteil, das ein Element eines Handschuhfachs oder einer Fahrzeugtürverkleidung bildet und eine Heizstruktur nach einem der vorhergehenden Ansprüche aufweist.

## Claims

1. Heating structure (1) intended particularly to be installed inside a vehicle passenger compartment, said structure being particularly a radiant panel, the heating structure (30) comprising at least one resistive layer arranged to produce heat release when this layer (36) is traversed by an electric current, this structure further comprising a network of electrodes including a plurality of contact electrodes (34) arranged to be in electrical contact with the resistive layer to allow electric current to flow in this resistive layer, the contact electrodes (34) and the resistive layer are carried on a substrate (36) made of a flexible material capable of taking a predetermined shape by deformation, this substrate being particularly also extensible.

2. Heating structure according to the preceding claim, wherein the contact electrodes (34) are formed by interwoven, woven or knitted wires, on or in a respectively woven or knitted substrate.

3. Heating structure according to claim 1, wherein the substrate is a non-woven textile.

4. Heating structure according to any of the preceding claims, wherein the substrate is an extensible textile or extensible knit that incorporates wires used as contact electrodes and the resistive layer is placed on the surface.

5. Heating structure according to any of the preceding claims and claim 2, wherein several contact electrodes being connected together to a distribution electrode, the connection between the distribution electrode and the contact electrodes can be achieved by integrating the distribution electrode in the weaving weft and the contact electrodes in the weaving warp or vice versa.

6. Heating structure according to any of the preceding claims, wherein the contact electrodes (34) and distribution electrodes (32) are for example made of copper wires.

7. Component forming an element of a glove box or a vehicle door panel, comprising a heating structure according to any of the preceding claims.
